# EUROPÄISCHE PATENTANMELDUNG

(11) **EP 1 276 247 A1**
(43) Veröffentlichungstag der Anmeldung: **15.01.2003**
(21) Anmeldenummer: 01117148.5
(22) Anmeldetag: 13.07.2001
(51) Int. Cl.: H04B 1/707, H04B 7/08

(54) **Verfahren zur Demodulation und Detektion von Spread-Spectrum-Signalen**

(71) Anmelder: SIEMENS AKTIENGESELLSCHAFT, 80333 München (DE)
(72) Erfinder: Breining, Christina, Dr., 89075 Ulm (DE); Dieterich, Hans, Dr., 89075 Ulm (DE); Frey, Thomas, 89081 Ulm (DE); Schnabl, Gottfried, Dr., 89077 Ulm (DE); Schreyoegg, Christoph, Dr., 89073 Ulm (DE); Schmid, Joachim, 89597 Munderkingen (DE)

(57) **Zusammenfassung**

Bei einem Funkkommunikationssystem mit Random-Access-Zugriff gelangt ein gesendetes Spread-Spectrum-Sendesignal eines Teilnehmers an ein Diversity-Empfangssystem, das als Empfangssignale sich durch Mehrwegeausbreitung unterscheidende Spread-Spectrum-Signale des Teilnehmers zur Verfügung stellt. Diese werden mit Hilfe eines Überabtastfaktors, der der einfachen Signalbandbreite des Spread-Spectrum-Signals entspricht, in komplexwertige Datenströme umgeformt und gelangen jeweils abwechselnd aufeinanderfolgend an Eingänge von aufeinanderfolgenden, einem Demodulator zugeordneten Korrelatorfingern zur Bildung eines Demodulationsergebnisses. Das Demodulationsergebnis, das dadurch jeweils aufeinanderfolgend kennzeichnende Anteile der Datenströme enthält, wird mit Hilfe eines Detektors bewertet.

## Beschreibung

Verfahren zur Demodulation und Detektion von mit Hilfe eines Diversity-Empfangssystems empfangenen Spread-Spectrum-Signalen eines von einem Teilnehmer gesendeten Spread-Spectrum-Sendesignals bei einem Funkkommunikationssystem mit Random-Access-Zugriff.

Die Erfindung betrifft ein Verfahren zur Random-Access Demodulation und Detektion von Spread-Spectrum-Signalen in einem Funkkommunikationssystem, bei dem über ein Diversity-Empfangssystem ein gesendetes Signal eines Teilnehmers mehrfach empfangen wird, wobei sich die empfangenen Spread-Spectrum-Signale durch eine erfolgte Mehrwegausbreitung voneinander unterscheiden.

Bei Funkkommunikationssystemen sind Vielfach-Zugriffsverfahren bekannt, mit deren Hilfe eine Vielzahl an Übertragungen gleichzeitig abgewickelt werden, wie beispielsweise CDMA-, FD-CDMA- oder TD-CDMA-Zugriffsverfahren. Ein zu übertragendes Signal eines Teilnehmers wird dabei mit Hilfe eines Spreizcodes gespreizt und als sogenanntes Spread-Spectrum-Signal übertragen. Mit Hilfe des bekannten Spreizcodes wird das Signal im Empfangsfall zurückgewonnen.

Weiterhin sind Funkkommunikationssysteme bekannt, bei denen der Empfang von Funksignalen mit Hilfe eines Diversity-Empfangssystems verbessert wird. Das Diversity-Empfangssystem ist beispielsweise als Polarisations-Diversity-Empfangssystem oder als Space-Diversity-Empfangssystem ausgeführt. Ein gesendetes Signal eines Teilnehmers wird mit Hilfe von mindestens zwei beim Diversity-Empfangssystem angeordneten Erregersystemen empfangen und nachfolgend bewertet, wobei sich die empfangenen Signale durch Mehrwegeausbreitung bei der Funkübertragung voneinander unterscheiden.

Beispielsweise wird ein gesendetes Signal eines Teilnehmers über zwei Erregersysteme gleichzeitig empfangen, bewertet und nur eines von beiden weiterverarbeitet. Oder es werden beide empfangenen Signale miteinander kombiniert und weiterverarbeitet.

Wird bei einem Funkkommunikationssystem mit einem der oben beschriebenen Vielfachzugriffsverfahren ein Diversity-Empfangssystem verwendet, so wird pro Erregersystem für das einzelne empfangene Spread-Spectrum-Signal eine Demodulation und eine Detektion durchgeführt. Die Demodulation erfolgt dabei mit Hilfe von Korrelatorfingern eines Demodulators bzw. Korrelators. Da die Demodulation für jedes einzelne empfangene Spread-Spectrum-Signal erfolgt, erhöht sich die Anzahl der Demodulatoren entsprechend der Anzahl der verwendeten Erregersysteme beim Diversity-Empfangssystem.

Zwischen den über das Diversity-Empfangssystem empfangenen, sich durch die Mehrwegeausbreitung unterscheidenden Spread-Spectrum-Signalen eines Teilnehmers bestehen in der Regel bestimmte Beziehungen. Sie werden mit gleicher mittlerer Pfadleistung pro Laufzeit empfangen, da sie in guter Näherung gleiche Mehrwege-Profile aufweisen. Lediglich die aktuellen Pfadamplituden der sich durch die Mehrwegeausbreitung unterscheidenden, empfangenen Spread-Spectrum-Signale unterscheiden sich, was auch als unkorreliertes Fast-Fading (schneller Schwund) bezeichnet wird.

Die Aufgabe der vorliegenden Erfindung besteht nun darin, bei einem Funkkommunikationssystem, bei dem Spread-Spectrum-Signale übertragen werden, den Signalempfang mit Hilfe eines Diversity-Empfangssystem einerseits zu verbessern, andererseits jedoch einen erhöhten Aufwand bei Demodulation und Detektion zu vermeiden.

Die Aufgabe der Erfindung wird durch die Merkmale des Anspruchs 1 gelöst. Vorteilhafte Weiterbildungen der Erfindung sind in den Unteransprüchen angegeben.

Der Vorteil des erfindungsgemäßen Verfahrens besteht darin, dass mit Hilfe des Diversity-Empfangssystems ohne erhöhten Hardwareaufwand für die Demodulation und Detektion eine Verbesserung der Empfangssituation erreicht werden kann.

Durch die erfindungsgemäße Gestaltung des Demodulationsergebnisses, das aufeinanderfolgend abwechselnd kennzeichnende Anteile der beiden Datenströme aufweist, ist eine auswählende Empfangsbewertung durch den Detektor auch dann möglich, wenn nur ein einzelnes Spread-Spectrum-Signal mit einer erforderlichen Mindestqualität empfangen wird.

Durch die erfindungsgemäße periodische Korrelation des ersten und des zweiten Datenstroms im Abstand einer Chipdauer Tc eines elementaren Modulationssymbols, wobei die Korrelation des zweiten Datenstroms zeitlich um die halbe Chipdauer Tc eines elementaren Modulationssymbols zur periodischen Korrelation des ersten Datenstroms versetzt erfolgt, wird unter Berücksichtigung der Ähnlichkeit der beiden Spread-Spectrum-Signale eine virtuelle Auflösung Δτ' von Δτ'= Tc/2 erreicht. Dabei bestimmt Δτ' den Verzögerungszeitunterschied zweier Verzögerungselemente von zwei benachbarten, aufeinanderfolgenden Korrelatorfingern.

Pro Spread-Spectrum-Signal ist eine Entspreizung von Nc Verzögerungen (Hypothesen) durchzuführen.
Das so erzielte Demodulationsergebnis gelangt zur Bewertung.

Im Folgenden wird ein Ausführungsbeispiel der Erfindung anhand der Zeichnung näher erläutert. Dabei zeigen:
- FIG 1: den prinzipiellen Aufbau einer Empfangseinrichtung zur Demodulation und Detektion eines von einem Teilnehmer gesendeten Spread-Spectrum-Signals in einem CDMA-Funkkommunikationssystem nach dem Stand der Technik,
- FIG 2: den Aufbau einer Empfangseinrichtung zur Demodulation und Detektion eines von einem Teilnehmer gesendeten Spread-Spectrum-Signals in einem CDMA-Funkkommunikationssystem mit Diversity-Empfang nach dem Stand der Technik,
- FIG 3: den erfindungsgemäßen Aufbau einer Empfangseinrichtung zur Demodulation und Detektion eines von einem Teilnehmer gesendeten Spread-Spectrum-Signals in einem CDMA-Funkkommunikationssystem mit Diversity-Empfang,
- FIG 4: ein über eine erste Antenne empfangenes erstes Empfangssignal und dessen erfindungsgemäße Abtastung,
- FIG 5: vergleichend zu FIG 4 ein über eine zweite Antenne empfangenes zweites Empfangssignal und dessen erfindungsgemäße Abtastung, und
- FIG 6: vergleichend mit FIG 4 und FIG 5 ein daraus gewonnenes Demodulationsergebnis.

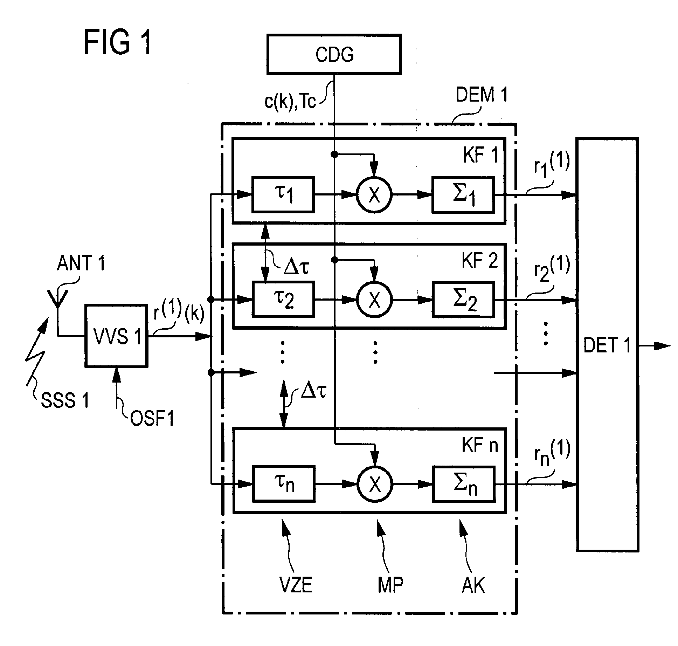

FIG 1 zeigt den prinzipiellen Aufbau einer Empfangseinrichtung zur Demodulation und Detektion eines von einem Teilnehmer gesendeten Spread-Spectrum-Signals in einem CDMA-Funkkommunikationssystem nach dem Stand der Technik.

Ein Spread-Spectrum-Signal SSS1 wird über eine Antenne ANT1 als Erregersystem empfangen und gelangt an eine Vorverarbeitungsstufe VVS1, die einen komplexwertigen Datenstrom r⁽¹⁾ (k) als Ausgangssignal liefert. Das Spread-Spectrum-Signal SSS1 wird durch die Vorverarbeitungsstufe VVS1 verstärkt, von einer hochfrequenten Trägerfrequenz ins Basisband umgesetzt, analog-digital gewandelt und mit einem Empfangsfilter, entsprechend dem Spektrum des Spread-Spectrum-Signals, gefiltert (matched filter).

Bei der Vorverarbeitungsstufe VVS1 wird ein Überabtastfaktor OSF1 verwendet, der der doppelten Signalbandbreite des Spread-Spectrum-Signals SSS1 entspricht.

Der komlexwertige Datenstrom r⁽¹⁾ (k) gelangt an mehrere Eingänge eines Demodulators DEM1. Dort werden aus dem komlexwertigen Datenstrom r⁽¹⁾ (k) Demodulationsergebnisse r₁⁽¹⁾, r₂⁽¹⁾, ... rₙ⁽¹⁾ als Ausgangssignale gewonnen, die an einen Detektor DET1 zur Bewertung gelangen. Der Detektor DET1 weist für einen Detektionsbereich von N_{c}-Chips für die Verarbeitung des empfangenen Spread-Spectrum-Signal SSS1 insgesamt Nₛ = OSF1*N_{c} Eingänge auf.

Im Demodulator DEM1 sind Nₛ Korrelatorfinger KF1 bis KFn zur Korrelation des komplexwertigen Datenstroms r⁽¹⁾ (k) angeordnet. Jeder Korrelatorfinger KF1 bis KFn beinhaltet ein Verzögerungselement VZE, einen nachgeschalteten Multiplizierer MP und einen Akkumulator AK über eine Codesequenzlänge Σ1 bis Σn. Ein Codegenerator CDG stellt eine für eine Korrelation bzw. Entspreizung benötigte Codesequenz c(k) mit einer Chipdauer Tc eines elementaren Modulationssymbols zur Verfügung.
Die einzelnen Verzögerungselemente VZE weisen Verzögerungszeiten τ1 bis τn auf, wobei beispielsweise die Verzögerungszeiten τ1 und τ2 von zwei aufeinanderfolgenden Korrelatorfingern KF1 und KF2 einen Verzögerungszeit-Unterschied Δτ aufweisen. Der Verzögerungszeit-Unterschied Δτ errechnet sich als Quotient aus Chipdauer Tc eines elementaren Modulationssymbols geteilt durch den Überabtastfaktor OSF1.

Der komplexwertige Datenstrom r⁽¹⁾ (k) gelangt an Ns Eingänge der Ns Korrelatorfinger KF1 bis KFn, wird dort mit Hilfe des jeweiligen Verzögerungselements VZE verzögert, mit Hilfe der Codesequenz c(k), des jeweiligen Multiplizierers MP und des jeweiligen Akkumulators AK demoduliert und gelangt als Demodulationsergebnis r₁⁽¹⁾, r₂⁽¹⁾, ... rₙ⁽¹⁾ an die Ns Eingänge des Detektors DET1.

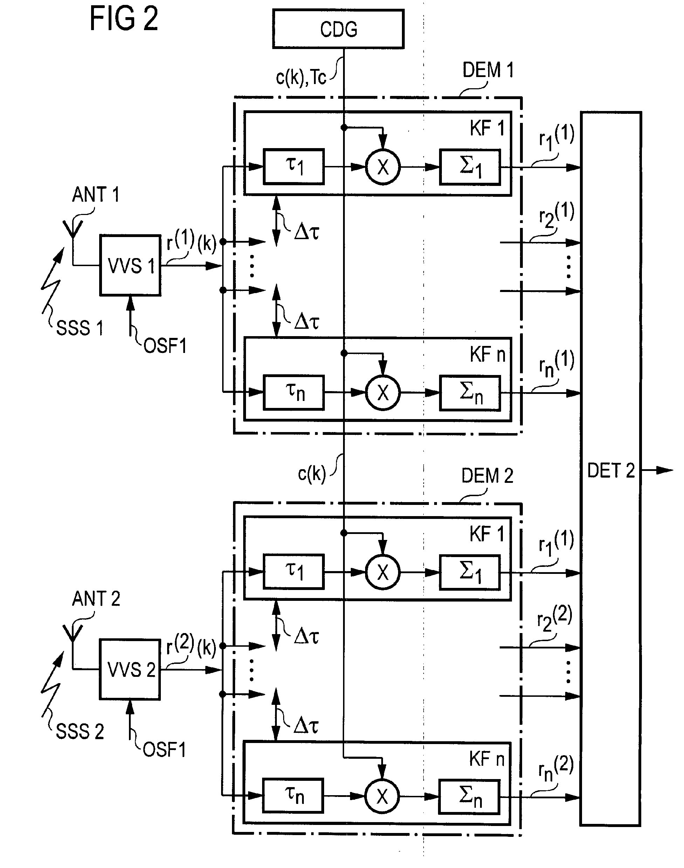

FIG 2 zeigt den Aufbau einer Empfangseinrichtung zur Demodulation und Detektion eines von einem Teilnehmer gesendeten Spread-Spectrum-Signals in einem CDMA-Funkkommunikationssystem mit Diversity-Empfang nach dem Stand der Technik.

Mit Hilfe eines Diversity-Empfangssystems, das beispielsweise als ein Space-Diversity-Empfangssystem mit zwei Antennen ANT1 und ANT2 ausgebildet ist, wird vergleichend mit FIG 1 zusätzlich zum Spread-Spectrum-Signal SSS1 ein zweites Spread-Spectrum-Signal SSS2 empfangen und parallel zum Spread-Spectrum-Signal SSS1 verarbeitet, wobei es sich durch eine erfolgte Mehrwegeausbreitung vom ersten Spread-Spectrum-Signal SSS1 unterscheidet.

Mit Hilfe einer zweiten Vorverarbeitungsstufe VVS2, die baugleich zu VVS1 ist, wird ein zweiter komplexwertiger Datenstrom r⁽²⁾(k) erzeugt, der seinerseits an Nₛ Eingänge eines zweiten Demodulators DEM2 gelangt, der wiederum baugleich zu DEM1 ist. Dort gewonnene Demodulationsergebnisse r₁⁽²⁾, r₂⁽²⁾, ... rₙ⁽²⁾ gelangen zusammen mit den Demodulationsergebnisse r₁⁽¹⁾, r₂⁽¹⁾, ... rₙ⁽¹⁾ des Demodulators DEM1 an nun insgesamt 2*Nₛ Eingänge eines gemeinsamen Detektors DET2 zur weiteren Bewertung und Verarbeitung.

Die Anzahl der Eingänge des Detektors DET2 wird bedingt durch das aus den beiden Antennen ANT1 und ANT2 als Erregersystemen gebildete Diversity-Empfangssystem, bzw. durch die Verarbeitung der beiden empfangenen Spread-Spectrum-Signale SSS1 und SSS2, wodurch der gemeinsame Detektor DET2, vergleichend zum Detektor DET1 aus FIG 1, die doppelte Anzahl an Eingängen zur Aufnahme der Demodulationsergebnisse r₁⁽²⁾, r₂⁽²⁾, ... rₙ⁽²⁾ und r₁⁽¹⁾, r₂⁽¹⁾, ... rₙ⁽¹⁾ aufweist.

Der Abstand zwischen den beiden Antennen ANT1 und ANT2 des beschriebenen Space-Diversity-Empfangssystems wird so gewählt, dass die Spread-Spectrum-Signale SSS1 und SSS2 dort möglichst unkorreliert bezüglich des Fast-Fading empfangen werden. Das Diversity-Empfangssystem kann auch als Polarisations-Diversity-Empfangssystem, mit üblicherweise zwei orthogonal aufeinander stehenden Polarisationen realisiert werden. Ebenso sind Kombinationen aus Space-Diversity-Empfangssystemen und Polarisations-Diversity-Empfangssystemen vorstellbar.

Im Vergleich zur Anordnung nach FIG 1 wird bei der bekannten Anordnung gemäß FIG 2 mit Hilfe des Diversity-Empfangssystems einerseits der Empfang verbessert, andererseits wird ein zusätzlicher Demodulator DEM2 benötigt und einhergehend mit der zusätzlichen zweiten Antenne ANT2, bzw. des zweiten empfangenen Spread-Spectrum-Signals SSS2, wird der Aufwand für den Detektor DET2 entsprechend erhöht.

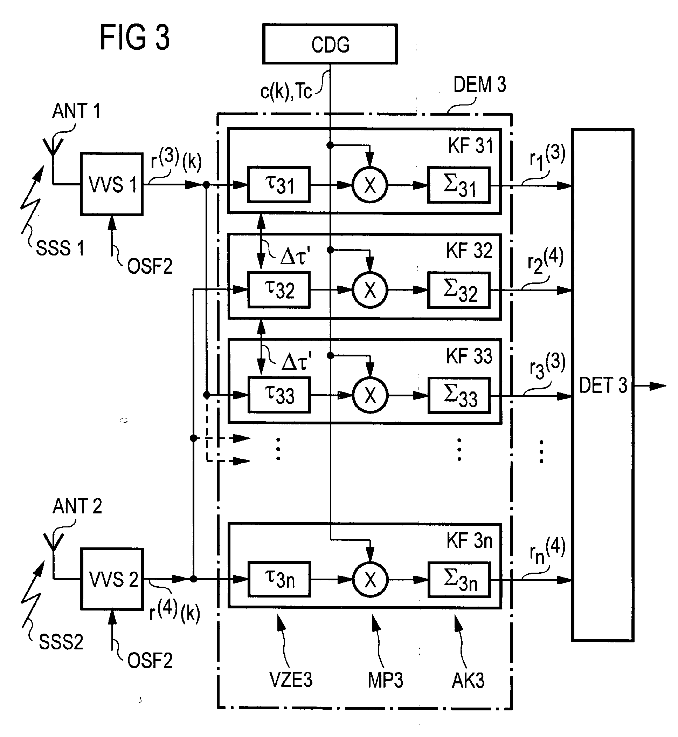

FIG 3 zeigt den erfindungsgemäßen Aufbau einer Empfangseinrichtung zur Demodulation und Detektion eines von einem Teilnehmer gesendeten Spread-Spectrum-Signals in einem CDMA-Funkkommunikationssystem mit Diversity-Empfang.

Es werden, vergleichend mit FIG 2, zwei Spread-Spectrum-Signale SSS1 und SSS2 über zwei Antennen ANT1 und ANT2 als Erregersysteme empfangen und mit Hilfe von zwei baugleichen Vorverarbeitungsstufen VVS1 und VVS2 zwei komplexwertige Datenströme r⁽³⁾ (k) und r⁽⁴⁾ (k) gewonnen.
Jedes Spread-Spectrum-Signal SSS1 bzw. SSS2 wird durch die Vorverarbeitungsstufe VVS1 bzw. VVS2 verstärkt, von einer hochfrequenten Trägerfrequenz ins Basisband umgesetzt, analog-digital gewandelt und mit einem Empfangsfilter, entsprechend dem Spektrum des Spread-Spectrum-Signals, gefiltert (matched filter).

Dabei wird erfindungsgemäß bei beiden Vorverarbeitungsstufen VVS1 und VVS2 jeweils ein Überabtastfaktor OSF2 verwendet, der, vergleichend mit FIG 1 und FIG 2, nur der einfachen Bandbreite der Spread-Spectrum-Signale SSS1 und SSS2 entspricht.

Zur Demodulation kommt nun ein Demodulator DEM3 zur Anwendung, an dessen N_{S3} Eingänge erfindungsgemäß abwechselnd aufeinanderfolgend die komplexwertigen Datenströme r⁽³⁾ (k) und r⁽⁴⁾ (k) gelangen.
Der Detektor DET3 weist vergleichend mit FIG 2 und FIG 1 für einen Detektionsbereich von N_{c}-Chips insgesamt NS3 Eingänge auf, die sich aus dem Produkt N_{S3} = OSF2 * N_{c} * Anzahl der Erregersysteme errechnet, mit OSF2 = 0,5 * OSF1 und der Anzahl der Erregersysteme gleich 2.

Beim Demodulator DEM3 sind N_{S3} Korrelatorfinger KF31 bis KF3n zur Korrelation der komplexwertigen Datenströme r⁽³⁾ (k) bzw. r⁽⁴⁾ (k) angeordnet. Jeder Korrelatorfinger KF31 bis KF3n beinhaltet ein Verzögerungselement VZE3, einen nachgeschalteten Multiplizierer MP3 und einen Akkumulator AK3 über eine Codesequenzlänge Σ31 bis Σ3n. Ein Codegenerator CDG stellt vergleichend mit FIG 1 wieder eine für eine Korrelation bzw. Entspreizung benötigte Codesequenz c(k) mit einer Chipdauer Tc eines elementaren Modulationssymbols zur Verfügung.

Die einzelnen Verzögerungselemente VZE3 weisen Verzögerungszeiten τ31 bis τ3n auf, wobei beispielsweise die Verzögerungszeiten τ31 und τ32 von zwei aufeinanderfolgenden Korrelatorfingern KF31 und KF32 einen Verzögerungszeit-Unterschied Δτ' aufweisen, der sich aus dem Quotienten Δτ' = Chipdauer eines elementaren Modulationssymbols Tc geteilt durch das Produkt aus Überabtastfaktor OSF2 mit der Anzahl der Erregersysteme errechnet. Dadurch wird der Verzögerungszeitunterschied Δτ' = Tc .

Die Anzahl der Korrelatorfinger N_{S3} errechnet sich aus dem Produkt Detektionsbereich N_{c} * Überabtastfaktor OSF2 * Anzahl der Erregersysteme. Mit OSF2 ergibt sich somit trotz Diversity-Empfangssystem eine zu FIG 1 identische Anzahl an Korrelatorfingern KF31 bis KF3n bzw. Eingängen am Detektor.

Der komplexwertige Datenstrom r⁽³⁾ (k) bzw. r⁽⁴⁾ (k) wird beim jeweiligen Korrelatorfinger KF31 bis KF3n mit Hilfe des jeweiligen Verzögerungselements VZE3 verzögert, mit Hilfe der Codesequenz c(k), des jeweiligen Multiplizierers MP3 und des jeweiligen Akkumulators AK3 demoduliert.

Dadurch ergibt sich ein Demodulationsergebnis r₁⁽³⁾, r₂⁽⁴⁾, r₃⁽³⁾, ..., rₙ⁽⁴⁾, das abwechselnd Anteile der beiden Spread-Spectrum-Signale SSS1 und SSS2 beinhaltet, und das an N_{S3} Eingänge eines Detektors DET3 zur Detektion und Bewertung gelangt.

Zur Bildung des Demodulationsergebnis r₁⁽³⁾, r₂⁽⁴⁾, r₃⁽³⁾, r₄⁽⁴⁾, ..., rₙ⁽⁴⁾ werden der erste und der zweite komlexwertige Datenstrom r⁽³⁾ (k) und r⁽⁴⁾ (k) mit Hilfe der beim Demodulator DEM3 angeordneten Korrelatorfinger KF31 bis KF3n periodisch im Abstand von einer Chipdauer Tc eines elementaren Modulationssymbols korreliert. Die periodische Korrelation des zweiten Datenstromes r⁽⁴⁾ (k) wird mit einem zeitlichen Versatz von einer halben Chipdauer Tc eines elementaren Modulationssymbols zur periodischen Korrelation des ersten Datenstromes r⁽³⁾ (k) vorgenommen.

Der Detektor DET3 nimmt mittels eines geeigneten Algorithmus eine Bewertung des Demodulationsergebnis r₁⁽³⁾, r₂⁽⁴⁾, r₃⁽³⁾, r₄⁽⁴⁾, ..., rₙ⁽⁴⁾ und damit eine Bewertung der Empfangssituation an den Erregersystemen ANT1 und ANT2 des Diversity-Empfangssystems vor.

Durch das erfindungsgemäße Abtasten mit dem Überabtastfaktor OSF2, der der einfachen Signalbandbreite des Spread-Spectrum-Signals entspricht, und durch das abwechselnde Einspeisen der komplexwertigen Datenströme r⁽³⁾ (k) und r⁽⁴⁾ (k) an N_{S3} Eingänge des Demodulators DEM3 bzw. seiner Korrelatorfinger KF31 bis KF3n, wird vergleichend mit FIG 2 ein Demodulator eingespart und der Aufwand beim Detektor DET3 minimiert, bei einer erzielten Verbesserung der Empfangssituation durch das Diversity-Empfangssystem.

Das beschriebene Diversity-Empfangssystem kann wieder als Space-Diversity-Empfangssystem oder als Polarisations-Diversity-Empfangssystem oder als Kombination daraus ausgebildet sein.

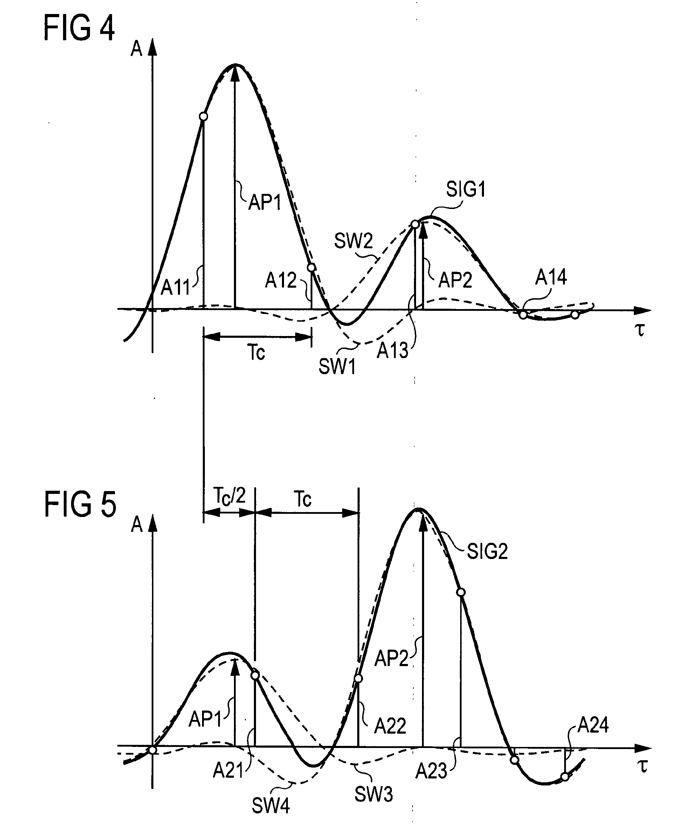

FIG 4 zeigt ein über eine erste Antenne empfangenes erstes Empfangssignal SIG1 und dessen erfindungsgemäße Abtastung.

Zwei Signale SW1 und SW2 eines Teilnehmers gelangen über zwei Ausbreitungspfade AP1 und AP2 an die erste Antenne und liegen dort überlagert als Empfangssignal SIG1 an. Die beiden Signale SW1 und SW2 unterscheiden sich aufgrund von unkorreliertem Fast-Fading und der Mehrwegeausbreitung in ihren Amplituden.
Die erfindungsgemäße Korrelation des ersten Empfangssignals SIG1 entspricht dessen Abtastung an diskreten Zeitpunkten im Abstand der Chipdauer eines elementaren Modulationssymbols Tc. Die erfolgte Abtastung liefert als Ergebnis somit Amplitudenwerte A11, A12, A13 und A14.

FIG 5 zeigt vergleichend zu FIG 4 ein über eine zweite Antenne empfangenes zweites Empfangssignal SIG2 und dessen erfindungsgemäße Abtastung.

Zwei Signale SW3 und SW4 des Teilnehmers gelangen über die beiden Ausbreitungspfade AP1 und AP2 an die zweite Antenne und liegen dort überlagert als Empfangssignal SIG2 an. Die beiden Signale SW3 und SW4 unterscheiden sich ebenfalls aufgrund von unkorreliertem Fast-Fading und der erfolgten Mehrwegeausbreitung in ihren Amplituden.

Die erfindungsgemäße Korrelation des zweiten Empfangssignals SIG2 entspricht ebenfalls dessen Abtastung an diskreten Zeitpunkten im Abstand der Chipdauer eines elementaren Modulationssymbols Tc, sie erfolgt jedoch zeitlich um den Abstand einer halben Chipdauer eines elementaren Modulationssysmbols Tc versetzt zu den Abtastzeitpunkten des ersten Empfangssignals SIG1.
Die erfolgte Abtastung liefert als Ergebnis Amplitudenwerte A21, A22, A23 und A24.

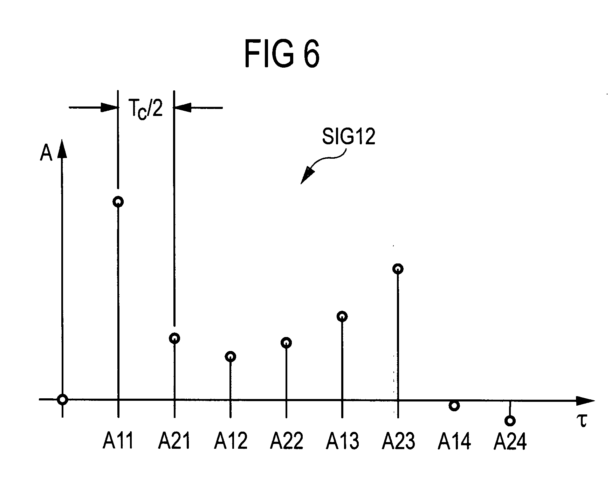

FIG 6 zeigt vergleichend mit FIG 4 und FIG 5 ein daraus gewonnenes Demodulationsergebnis SIG12.
Das Demodulationsergebnis SIG12 beinhaltet als Anteile von SIG1 und SIG2 die jeweils um Tc/2 versetzten, aufeinander folgenden Amplitudenwerte A11, A12, A13, A14, A21, A22, A23 und A24, die nachfolgend zur Detektion benutzt werden.

## Patentansprüche

1. Verfahren zur Demodulation und Detektion von mit Hilfe eines Diversity-Empfangssystems empfangenen Spread-Spectrum-Signalen eines von einem Teilnehmer gesendeten Spread-Spectrum-Sendesignals bei einem Funkkommunikationssystem mit Random-Access-Zugriff,
- bei dem mindestens zwei sich durch Mehrwegeausbreitung unterscheidende Spread-Spectrum-Signale mit Hilfe von mindestens zwei im Diversity-Emfangssystem enthaltenen Erregersystemen empfangen werden,
- bei dem ein erstes Spread-Spectrum-Signal zu einem ersten komplexwertigen Datenstrom und ein zweites Spread-Spectrum-Signal zu einem zweiten komplexwertigen Datenstrom verarbeitet werden,
- bei dem diese beiden Datenströme derart aufgeteilt werden, dass sie jeweils abwechselnd aufeinanderfolgend an Eingänge von einem Demodulator zugeordneten Korrelatorfingern zur Bildung eines Demodulationsergebnisses gelangen, wobei das Demodulationsergebnis kennzeichnende Anteile des ersten und des zweiten Datenstroms in aufeinanderfolgendem Wechsel aufweist und das Demodulationsergebnis mittels eines Detektors bewertet wird, und
- bei dem jedes einzelne Spread-Spectrum-Signal zur Bildung des jeweiligen Datenstroms mit einem Überabtastfaktor OSF komplexwertig abgetastet wird, der der einfachen Signalbandbreite des Spread-Spectrum-Signals entspricht.

2. Verfahren nach Anspruch 1, bei dem die Datenströme mittels Ns nebeneinander angeordneter Korrelatorfinger korreliert werden und Signale der Korrelatorfinger als Demodulationsergebnis an einen Detektor mit einem Detektionsbereich von Nc Chips und mit Ns Eingängen zur Aufnahme des Demodulationsergebnisses gelangen und die Anzahl Ns der Korrelatorfinger aus dem Produkt Detektionsbereich Nc * Überabtastfaktor OSF * Anzahl der Erregersysteme errechnet wird.

3. Verfahren nach Anspruch 1 oder 2, bei dem die Verarbeitung des einzelnen Spread-Spectrum-Signals zu einem Datenstrom mit Hilfe einer Vorverarbeitungsstufe und des Überabtastfaktor OSF derart erfolgt, dass das Spread-Spectrum-Signal verstärkt, ins Basisband umgesetzt, analog-digital-gewandelt und entsprechend seines Spektrums mit Hilfe eines Matched-Filters als Empfangsfilter gefiltert wird.

4. Verfahren nach Anspruch 1, 2 oder 3, bei dem jeder Korrelatorfinger seinen jeweiligen Datenstrom einem Verzögerungsglied, einen Multiplizierer und einem Akkumulator über eine Codesequenzlänge zur Korrelation zuführt.

5. Verfahren nach einem der Ansprüche 1 bis 4, bei dem die aufeinanderfolgenden Korrelatorfinger die komplexwertigen Datenströme mit Hilfe eines lokal erzeugten Entspreizungscodes innerhalb eines durch die Verzögerungsglieder vorgegebenen zeitlichen Verzögerungsbereiches τ1 bis τn korrelieren.

6. Verfahren nach Anspruch 5, bei dem der vorgegebene Verzögerungsbereich τ1 bis τn mit einer Schrittweite Δτ unterteilt wird und Δτ als Quotient aus Chipdauer Tc eines elementaren Modulationssymbols geteilt durch das Produkt aus Überabtastfaktor OSF und Anzahl der Erregersysteme errechnet wird, wobei Δτ den zeitlichen Unterschied zweier Verzögerungsglieder von zwei benachbarten Korrelatorfingern angibt.

7. Verfahren nach einem der vorhergehenden Ansprüche, bei dem zur Gewinnung des Demodulationsergebnisses der erste und der zweite komplexwertige Datenstrom mit Hilfe der Korrelatorfinger periodisch im Abstand von im wesentlichen einer Chipdauer Tc eines elementaren Modulationssymbols korreliert werden.

8. Verfahren nach Anspruch 7, bei dem die periodische Korrelation des zweiten Datenstroms mit einem zeitlichen Versatz von im wesentlichen der halben Chipdauer Tc eines elementaren Modulationssymbols zur periodischen Korrelation des ersten Datenstroms erfolgt.

9. Verfahren nach einem der vorhergehenden Ansprüche, bei dem als Demodulationsergebnis Ns Amplitudenwerte gewonnen werden, die untereinander um Tc/2 versetzt sind und die an Ns Eingänge des Detektors gelangen.

10. Verfahren nach einem der vorhergehenden Ansprüche, bei dem der Detektor mittels eines geeigneten Algorithmus anhand des Demodulationsergebnisses eine Empfangsbewertung der einzelnen Erregersysteme des Diversity-Empfangssystems vornimmt.
